# EUROPÄISCHE PATENTANMELDUNG

(11) **EP 2 169 030 A2**
(43) Veröffentlichungstag der Anmeldung: **31.03.2010**
(21) Anmeldenummer: 09165417.8
(22) Anmeldetag: 14.07.2009
(51) Int. Cl.: C10B 53/02, C10B 47/12, C10B 47/14, C10B 57/12, C10C 5/00, A01D 41/00, A01D 43/00

(54) **Thermochemischer Reaktor für ein selbstfahrendes Erntefahrzeug**

(30) Priorität: 29.09.2008 DE 102008049350
(71) Anmelder: CLAAS Selbstfahrende Erntemaschinen, 33428 Harsewinkel (DE)
(72) Erfinder: Weigelt, Dr. Horst, 33330 Gütersloh (DE)

(57) **Zusammenfassung**

Ein thermochemischer Reaktor (6) umfasst eine Kontaktoberfläche (14) und eine Anpressvorrichtung (18, 19; 36, 37) zum Anpressen von zu pyrolysierendem Rohstoff gegen die relativ zu dem Rohstoff drehbare rotationssymmetrische Kontaktoberfläche (14). Eine Erzeugende der Kontaktoberfläche (14) ist unter einem Winkel zu einem auf der Achse der Relativdrehung senkrechten Radius ausgerichtet.

## Beschreibung

Die vorliegende Erfindung betrifft einen thermochemischen Reaktor zur Gewinnung von gasförmigem oder flüssigem Kraftstoff aus einem Rohstoff, vorzugsweise aus Biomasse, durch pyrolytische Umsetzung.

In Anbetracht einer absehbaren Verknappung fossiler Energieträger und der klimatischen Auswirkungen ihrer Verwendung begegnet die energietechnische Nutzbarmachung von nachwachsenden Rohstoffen, d.h. von Biomasse, zunehmendem öffentlichen Interesse. Ein Problem bei der energietechnischen Nutzung von Biomasse ist ihr oft hoher Wasseranteil. Frische pflanzliche Biomasse hat im Allgemeinen einen so hohen Wasseranteil, dass die erzielbare Ausbeute an Kraftstoff die Kosten und den Energieaufwand des Erntens und des Zusammentragens an einer stationären Pyrolyseanlage nicht deckt. Wenn Biomasse trocken geerntet werden kann, ist das Verhältnis von Ausbeute zu Aufwand besser, da die Transportkosten für den hohen Wasseranteil entfallen. Dies setzt jedoch günstige klimatische Bedingungen voraus und ist im Allgemeinen nur bei einjährigen Pflanzen praktikabel, die nach Fruchtreife absterben und auf dem Feld trocknen. Um auch frische Biomasse wirtschaftlich verarbeiten zu können, müssen Wege gefunden werden, um die Transportkosten zu reduzieren. Ein Ansatz hierfür ist, die Verarbeitung zu Kraftstoff bereits auf dem Feld durchzuführen. DE 10 2004 003 011 A1 schlägt zu diesem Zweck ein feldgängiges Fahrzeug vor, das mehrere Verarbeitungsmodule mit sich führt, darunter eines zum Abpressen von Säften aus geerntetem Pflanzenmaterial und eines zum Verarbeiten der aus dem Pflanzenmaterial erhaltenen Trockensubstanz zu einem fraktionierten Raffinat, dessen Fraktionen aus Benzin, Dieselöl oder Schweröl bestehen sollen. Zum Aufbau dieses letzteren Moduls werden keine Angaben gemacht.

Ein thermochemischer Reaktor, mit dessen Hilfe aus entwässertem Pflanzenmaterial in einem feldgängigen Fahrzeug Kraftstoff gewonnen werden kann, muss kompakt sein und die Umsetzung in kurzer Zeit bewerkstelligen können, damit das Pflanzenmaterial mit der Rate, in der es geerntet wird, auch weiter verarbeitet werden kann. Außerdem sollte der Reaktor kontinuierlich arbeiten können.

Ein Verfahren, das diese Anforderungen zu erfüllen verspricht, ist die ablative Flash-Pyrolyse, bei der zu pyrolysierendes Material gegen eine heiße Oberfläche gepresst wird, an der es verschwelt, während sich Material und Oberfläche gegeneinander bewegen. Eine Vorrichtung für die ablative Flash-Pyrolyse mit einer Kontaktoberfläche und einer Anpressvorrichtung zum Anpressen von zu pyrolysierendem Rohstoff gegen die relativ zu dem Rohstoff drehbare rotationssymmetrische Kontaktoberfläche, ist z.B. in DE 103 45 842 A1 beschrieben.

Bei dieser bekannten Vorrichtung ist die Kontaktoberfläche durch eine um eine Achse rotierende Scheibe gebildet, und der Rohstoff wird in einer zu der Achse parallelen Richtung angepresst. Dabei ergibt sich das Problem, dass eine gleichmäßige Temperaturverteilung auf der an ihrer vom Rohstoff abgewandten Seite durch einen Brenner erhitzten Scheibe schwierig zu gewährleisten ist und die Geschwindigkeit, mit der Scheibe und Rohstoff sich gegeneinander bewegen, von der Entfernung des Kontaktpunktes zur Drehachse der Scheibe abhängt. Um einen hohen Rohstoffdurchsatz zu erreichen, sollte ein möglichst großer Anteil der Oberfläche der Scheibe für die Umsetzung genutzt werden. Je größer dieser Anteil ist, um so größer ist der Radiusbereich, über den sich die Kontaktfläche erstreckt, und um so ungleichmäßiger sind die Bedingungen, unter denen die Umsetzung stattfindet, und um so schwieriger ist es somit, den Prozess zu steuern.

Eine Aufgabe der vorliegenden Erfindung ist daher, einen thermochemischen Reaktor für die ablative Flash-Pyrolyse zu schaffen, der gleichmäßige Reaktionsbedingungen auf der gesamten Kontaktfläche zwischen Rohstoff und Kontaktkörper bei guter Ausnutzung der verfügbaren Oberfläche des Kontaktkörpers erreicht.

Die Aufgabe wird gelöst, in dem bei einem thermochemischen Reaktor um eine Achse drehbaren Reaktionskörper, an dem die Pyrolysereaktionen stattfinden, und einer Anpressvorrichtung zum Anpressen von zu pyrolysierendem Rohstoff gegen eine Kontaktoberfläche des Reaktionskörpers die Kontaktoberfläche wenigstens einen Teil einer Umfangsfläche des Reaktionskörpers bildet. Durch diese Anordnung ist die Variabilität der Relativgeschwindigkeit von Kontaktoberfläche und Rohstoff über den Querschnitt des Kontakts zwischen beiden im Vergleich zu der bekannten Kontaktscheibe verringert. So kann eine große Kontaktoberfläche mit homogenen Reaktionsbedingungen in einem kompakten Aufbau bereitgestellt werden.

Wenn die Kontaktoberfläche zylinderförmig ist, ist die Relativgeschwindigkeit von Rohstoff und Kontaktoberfläche auf dem gesamten Kontaktquerschnitt konstant.

Vorzugsweise ist über dem Reaktionskörper ein Behälter für unverdichteten Rohstoff vorgesehen, und die Anpressvorrichtung umfasst einen vom Boden des Behälters auf die Kontaktoberfläche zulaufenden Rohstoffkanal. So kann neuer Rohstoff aus dem Behälter allein unter Schwerkraftwirkung in die Anpressvorrichtung nachrücken.

Um den für die effiziente, schnelle Umsetzung des Rohstoffs erforderlichen Anpressdruck zu erzeugen, kann ein Förderwalzenpaar am Eingang des Rohstoffkanals angeordnet sein.

Alternativ kann auch eine Förderschnecke in dem Rohstoffkanal vorgesehen sein.

Der Rohstoffkanal ist vorzugsweise zur Kontaktoberfläche hin verjüngt, damit der Rohstoff beim Vorrücken im Kanal fortschreitend verdichtet wird und Hohlräume, die in einem stromaufwärtigen Bereich des Kanals im Rohstoff noch vorhanden sein können, mit fortschreitender Annäherung des Rohstoffs an die Kontaktoberfläche immer kleiner werden und vorzugsweise ganz verschwinden. So wird Luft bzw. Sauerstoff, der in den Hohlräumen des Rohstoffs vorhanden sein kann, am Erreichen der Kontaktoberfläche gehindert, und unerwünschte Oxidationsreaktionen an der Kontaktoberfläche können verhindert oder zumindest begrenzt werden. Die Verjüngung kann auf eine Schnittebene beschränkt, d.h. prismenförmig, oder in zwei Schnittebenen, d.h. pyramiden- oder trichterförmig sein.

Besonders zweckmäßig ist es, wenn mehrere Kontaktoberflächen an einem Trägerkörper in Richtung von dessen Drehachse gestaffelt angeordnet und über auf jeweils eine der Kontaktflächen mündende Rohstoffkanäle mit Rohstoff versorgbar sind. Zum einen können am Reaktionskörper zwischen den Kontaktflächen liegende Oberflächenbereiche anderweitig genutzt werden, wie im Folgenden noch deutlich wird, zum anderen benötigen mehrere nebeneinander liegende, enge verjüngte Förderkanäle zum Erzielen einer gewünschten Verdichtung des Rohstoffs weniger Baulänge als ein einziger breiter Kanal, so dass die Mehrheit von Kanälen und Kontaktflächen eine kompakte Bauform des Reaktors ermöglicht. Nicht zuletzt können mehrere in axialer Richtung benachbarte Rohstoffkanäle einfach und effizient über ein gemeinsames, achsparalleles Förderwalzenpaar mit Rohstoff versorgt werden.

Um die Ausdehnung der Kontaktoberfläche gut auszunutzen, sind vorzugsweise mehrere Rohstoffkanäle vorgesehen, die auf eine gleiche Kontaktoberfläche in deren Umfangsrichtung gestaffelt münden.

Um die zu erhitzende Masse des Reaktionskörpers gering zu halten, ist es zweckmäßig, dass dieser einen Hohlraum einschließt.

Die bei der Kontaktpyrolyse anfallenden Reaktionsprodukte sind zunächst gasförmig oder fest. Um feste Anteile aus einem Strom der Reaktionsprodukte in einem platzsparenden Aufbau abzuscheiden, kann die Oberfläche eines hohlen Reaktionskörpers zweckmäßigerweise zum Teil als ein Partikelabscheider ausgebildet sein, insbesondere in Form eines Zentrifugalabscheiders oder Partikelfilters, über den die gasförmigen Reaktionsprodukte in einen inneren Hohlraum des Reaktionskörpers gelangen können. Gereinigte Reaktionsprodukte können über eine von dem inneren Hohlraum ausgehende Abflussleitung entweichen.

Bei einem als Zentrifugalabscheider ausgebildeten Reaktionskörper können insbesondere Löcher in einem Mantel des Reaktionskörpers so ausgerichtet sein, dass sie hindurchtretenden Reaktionsprodukten einen Drehimpuls in Bezug auf eine Drehachse des Reaktionskörpers aufprägen.

Eine wirksame, gleichmäßige Erhitzung der Kontaktoberfläche kann über einen von der Kontaktoberfläche umgebenen Kanal für ein Wärmeträgerfluid erfolgen.

Dieser Kanal kann zweckmäßigerweise um einen Trägerkörper herum, insbesondere ringförmig, angeordnet sein. Um unnötige Wärmeverluste zum Trägerkörper hin zu vermeiden, ist vorzugsweise zwischen diesem und dem Kanal eine Wärmeisolationsschicht vorgesehen.

Die Kontaktoberfläche ist vorzugsweise mittels eines Brenners, der durch Reaktionsprodukte des Reaktors gespeist ist, direkt oder - mittels des oben erwähnten Wärmeträgerfluids - indirekt beheizbar.

Der erfindungsgemäße Reaktor verfügt zweckmäßigerweise über eine Zufuhrvorrichtung zum Rückführen von Reaktionsprodukt zum Rohstoff. Diese Zufuhrvorrichtung kann unterschiedlichen Zwecken dienen. Zum einen ist es möglich, durch Rückführen von heißem Reaktionsprodukt Restfeuchtigkeit aus dem Rohstoff vor dessen Umsetzung im Reaktor auszutreiben. Unabhängig hiervon besteht die Möglichkeit, durch das rückgeführte Reaktionsprodukt Luft aus den Hohlräumen des Rohstoffs zu verdrängen, so dass auch dann kein Sauerstoff an die Kontaktoberfläche vordringen kann, wenn nicht alle Hohlräume beim Durchgang durch einen Rohstoffkanal geschlossen werden.

Zur Verbesserung der Produktausbeute, der Qualität oder des Wirkungsgrades kann die Kontaktoberfläche mit einem Katalysator, insbesondere einem Hydrierungskatalysator, versehen sein.

Erfindungsgegenstand ist auch ein selbstfahrendes Erntefahrzeug mit einem Erntegutaufnehmer und einem thermochemischen Reaktor wie oben beschrieben für die pyrolytische Umsetzung des aufgenommen Ernteguts.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung der Verarbeitung des Ernteguts und der dafür eingesetzten Vorrichtungen an Bord eines selbstfahrenden Erntefahrzeugs;
- Fig. 2: einen radialen Schnitt durch den erfindungsgemäßen thermochemischen Reaktor;
- Fig. 3: einen Längsschnitt durch den in Fig. 2 gezeigten Reaktor;
- Fig. 4: einen Teilschnitt durch einen Reaktor gemäß einer zweiten Ausgestaltung der Erfindung; und
- Fig. 5: einen Teilschnitt durch einen Reaktor gemäß einer dritten Ausgestaltung der Erfindung.

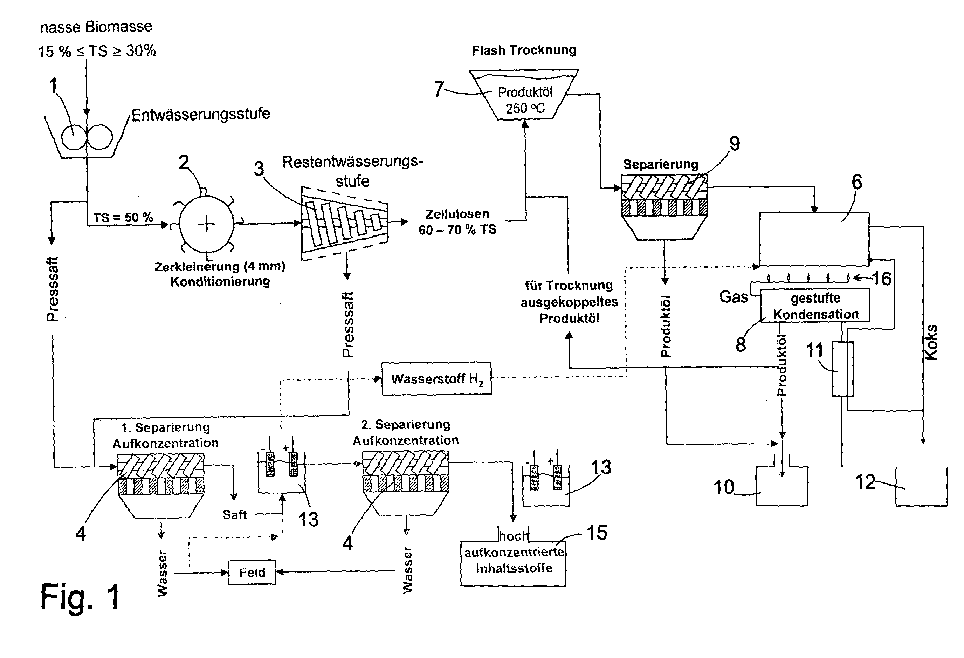

Die in Fig. 1 gezeigten und im Folgenden im Einzelnen beschriebenen Vorrichtungen sind vorzugsweise für den Einsatz in einem Erntefahrzeug gedacht, um von diesem geerntete Biomasse noch während des Erntevorgangs auf dem Feld zu Kraftstoff zu verarbeiten. Natürlich sind die gezeigten Vorrichtungen auch für andere, insbesondere stationäre Anwendungen geeignet. Eine Verwendung zur Verwertung von Nicht-Biomasse-Materialien, z.B. von gebrauchten Kunststoffen, kommt ebenfalls in Betracht.

Eine Außenansicht des Erntefahrzeugs ist nicht gezeigt, da seine äußere Gestalt, soweit sie nicht der eines herkömmlichen Mähdreschers oder Feldhäckslers gleicht, lediglich durch die Anforderung diktiert ist, die in Fig. 1 gezeigten Einrichtungen darin unterzubringen. Wie ein herkömmlicher Feldhäcksler oder Mähdrescher hat das Erntefahrzeug ein Fahrwerk, an dem vorne ein Erntegutaufnehmer austauschbar montiert ist. Der Erntegutaufnehmer ist mit dem eines herkömmlichen Feldhäckslers oder Mähdreschers identisch und austauschbar an diesem sowie am erfindungsgemäßen Erntefahrzeug verwendbar.

Zwei Presswalzen 1 bilden einen Spalt, dem die geerntete Biomasse vom Aufnehmer zugeführt wird. Beim Durchgang zwischen den Presswalzen 1 verliert die Biomasse je nach Pflanzenart etwa die Hälfte ihres Wassers; während der Anteil der Trockenmasse bei der frisch aufgenommenen Biomasse zwischen 10 und 30 % beträgt, ist der Anteil nach Durchgang durch die Presswalzen 1 auf 18 bis 46 % erhöht.

Die an den Presswalzen 1 vorentwässerte Biomasse durchläuft anschließend eine Häckselstufe 2, die wie bei einem Feldhäcksler eine rotierende Messerwalze und mit dieser zusammenwirkende ortsfeste Messer umfassen kann. Die Zerkleinerung ist intensiver als bei einem Feldhäcksler, zum Beispiel aufgrund einer engeren Staffelung der Messer oder einer erhöhten Verweildauer der Biomasse in der Häckselstufe 2, so dass beim Ausgang der Häckselstufe Teilchen mit einer typischen maximalen Größe von 4 mm erhalten werden.

Das zerkleinerte Material aus der Häckselstufe 2 wird einer zweiten Entwässerungsstufe 3, zum Beispiel einem Dekanter oder einer Siebzentrifuge, zugeführt. In Verbindung mit der intensiven Vorzerkleinerung ermöglicht dies eine Steigerung des Trockenmasseanteils auf 88 bis 98 Prozent. So wird ein fasriger, zellulosereicher Feststoff erhalten, dessen Masse nur noch zirka 10 bis 30 % der ursprünglich aufgenommenen Biomasse ausmacht.

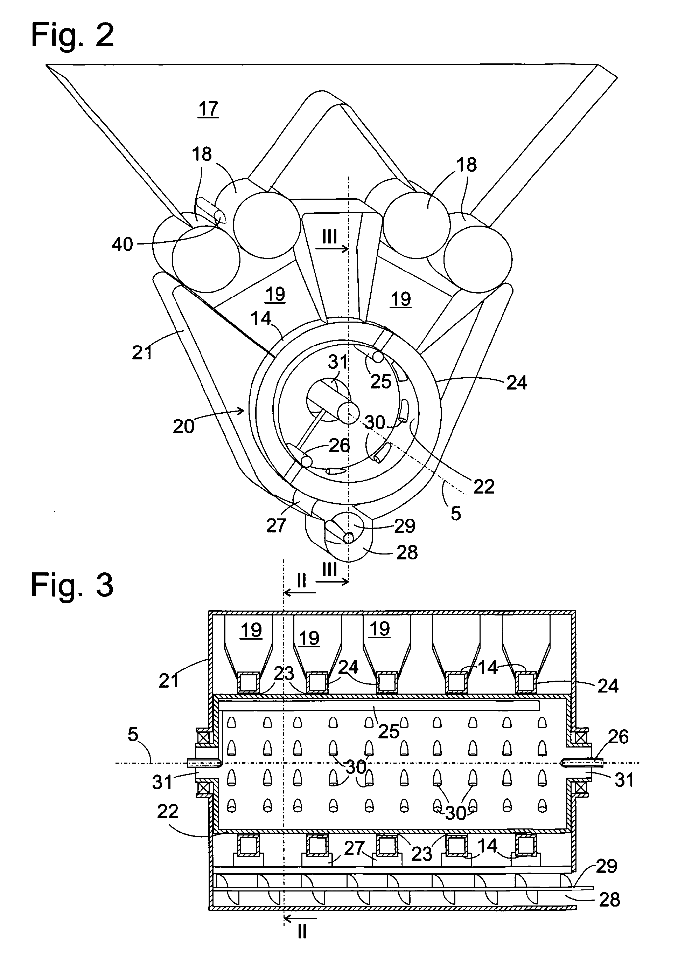

Das von der zweiten Entwässerungsstufe 3 ausgegebenen entwässerte Material durchläuft eine Trocknungsstufe 7 und eine Trennstufe 9, bevor es in einen Flash-Pyrolysereaktor 6 eingespeist wird. Dieser Reaktor wird an späterer Stelle mit Bezug auf die Fig. 2 bis 4 im Einzelnen beschrieben. Durch Erhitzung unter Luftabschluss in dem Reaktor 6 wird das zugeführte Material in einem kontinuierlichen Prozess umgesetzt in Wasser, diverse Kohlenwasserstoffe und einen im Wesentlichen aus Kohlenstoff bestehenden, als Koks bezeichneten Rest-Feststoffanteil. Die bei der hohen Temperatur des Reaktors 6 als Gas freigesetzten Reaktionsprodukte werden einer Kondensationsstufe 8 zugeführt und in Fraktionen mit unterschiedlichem Siedepunkt kondensiert.

In der Kondensationsstufe 8 nicht kondensierbares Gas speist einen Brenner 16, der den Reaktor 6 beheizt.

In der Kondensationsstufe 8 findet eine fraktionierte Kondensation statt, wobei Parameter der Fraktionierung so festgelegt sind, dass eine Fraktion im wesentlichen das gesamte mit der Biomasse in den Reaktor 6 eingetragene sowie das durch die Pyrolysereaktionen darin erzeugte Wasser enthält, während wenigstens eine andere Fraktion, als Produktöl bezeichnet, im wesentlichen nur aus Kohlenwasserstoffen besteht. Das erhaltene Produktöl wird in einem Tank 10 gesammelt, mit Ausnahme eines Teils, vorzugsweise einer bei hoher Temperatur kondensierenden Fraktion, die ganz oder teilweise aus der Kondensationsstufe 8 abgezweigt wird, um in der Trocknungsstufe 7 der entwässerten Biomasse aus der zweiten Entwässerungsstufe 3 zugesetzt zu werden.

Die Trocknungsstufe 7 kann Knet- oder Rührwerkzeuge zum Vermengen des Produktöls mit der entwässerten Biomasse aufweisen. Die hohe Temperatur des Produktöls bringt die restliche Feuchtigkeit in der Biomasse zum Verdampfen, so dass ein Gemisch aus Produktöl und im Wesentlichen wasserfreier Biomasse am Ausgang der Trocknungsstufe 7 abgezogen werden kann.

Dieses Gemisch durchläuft, bevor es den Reaktor 6 erreicht, eine Trennstufe 9, in der das Produktöl unter Druck von der Biomasse wieder abgeschieden wird. Das in dieser Weise abgetrennte Produktöl wird zusammen mit dem nicht der Trocknungsstufe 7 zugeführten Anteil des Produktöls aus der Kondensationsstufe 8 in dem Tank 10 gesammelt.

Einer bevorzugten Weiterbildung zufolge ist zum Reinigen der in der Kondensationsstufe 8 erhaltenen, im Wesentlichen aus Wasser bestehenden Kondensatfraktion ein Filter 11 vorgesehen. Als Filtersubstrat verwendet dieses Filter 11 einen Teil des Kokses aus dem Reaktor 6, der im Gegenstrom zu der wässrigen Fraktion kontinuierlich durch den Filter 11 gefördert wird und sich dabei mit den organischen Bestandteilen der wässrigen Fraktion sättigt. Das durch die Filterung erhaltene Wasser kann - wenn erforderlich, nach einer Nachreinigung - auf den Acker ausgegeben werden; der mit den organischen Anteilen gesättigte Koks kann zusammen mit dem restlichen Koks aus dem Reaktor 6 in einem Bunker 12 als Brennmaterial gesammelt werden, oder er kann - je nach Grad seiner Sättigung mit Wasser beziehungsweise mit organischem Material - in den Reaktor 6 direkt, wie in der Fig. 1 dargestellt, oder auf dem Umweg über die Trocknungsstufe 7 zurückgeführt werden, um die organischen Anteile im Reaktor 6 wieder abzudestillieren und zum Produktöl hinzuzufügen.

Einer anderen Weiterbildung der Erfindung zufolge ist eine Elektrolysezelle 13 vorgesehen, die mit dem angereicherten Anteil aus der Konzentrationsstufe 4 gespeist wird. Die Elektrolysezelle 13 ist mit frequenzmoduliertem Gleichstrom versorgt, um eine hohe Wasserstoffausbeute bei reduziertem Energieeinsatz zu erreichen. Aus der Elektrolyse gewonnener Wasserstoff wird in den Pyrolysereaktor 6 eingespeist. Die damit erreichte Steigerung des Wasserstoffangebots im Reaktor 6 verbessert die Umsetzung des in der Biomasse gebundenen Sauerstoffs zu Wasser, so dass ein sauerstoffärmeres und damit qualitativ hochwertigeres Öl aus der Flash-Pyrolyse erhalten wird.

Fig. 2 und 3 zeigen schematische Schnitte durch den Reaktor 6 in zwei zueinander senkrechten Ebenen. Den oberen Bereich des Reaktors 6 nimmt ein Schüttbunker 17 ein, in den die von der Trennstufe 9 ausgegebene, getrocknete und weitgehend von zuvor zugesetzten Produktölen befreite Biomasse eingespeist wird. Am Boden des Schüttbunkers 17 sind zwei Paare von gegenläufig drehangetriebenen Förderwalzen 18 mit zueinander parallelen Drehachsen angeordnet. Durch die Drehung der Förderwalzen 18 wird auf den Walzen 18 liegende Biomasse mitgezogen und einem Spalt zwischen den Förderwalzen 18 zugeführt. Unterhalb jedes Förderwalzenpaars 18 schließen sich mehrere in axialer Richtung der Förderwalzen 18 gestaffelte Kanäle 19 an, von denen zwei im Schnitt der Fig. 2 zu erkennen sind. Die geschlossenwandigen, sich nach unten pyramidenförmig verengenden Kanäle 19 führen die Biomasse einem ebenfalls drehangetriebenen Reaktionskörper, hier einer Reaktortrommel 20, zu. Die Reaktortrommel 20 ist vor dem Zutritt atmosphärischer Luft geschützt in einem Reaktorgehäuse 21 untergebracht, in das die Kanäle 19 hineinragen.

Die Reaktortrommel 20 umfasst einen hohlen Trägerzylinder 22, auf dem, durch eine Isolationsschicht 23 abgeschirmt, in axialer Richtung gestaffelt und voneinander beabstandet, Wärmetauscherringe 24 angebracht sind. Jeder Wärmetauscherring 24 umfasst zwei halbkreisförmige Rohrabschnitte, durch die ein mit Hilfe des Brenners 16 außerhalb des Reaktorgehäuses 21 erhitztes Wärmeträgerfluid wie etwa ein Silikonöl mit einer Temperatur von etwa 450° C umgewälzt wird. Versorgungs- und Abflussleitungen für das Wärmeträgerfluid, zwischen denen die Wärmetauscherringe 24 strömungstechnisch parallel geschaltet angeordnet sind, sind mit 25 bzw. 26 bezeichnet.

Wie in den Fig. 2 und 3 deutlich zu sehen, sind die Kanäle 19 jeweils von den Förderwalzen 18 zum Wärmetauscherring 24 hin deutlich verjüngt. Durch die Verjüngung wird die Biomasse mit zunehmender Annäherung an den Wärmetauscherring 24 immer weiter verdichtet, so dass luftgefüllte Hohlräume nicht oder nur in vernachlässigbarem Umfang die Oberfläche der Wärmetauscherringe 24 erreichen. Es ist hierfür nicht erforderlich, die Biomasse so stark zu verdichten, dass überhaupt keine Hohlräume bestehen bleiben; insbesondere wenn die Biomasse vor dem Eintritt in den Schüttbunker 17 durch Versetzen mit Produktöl getrocknet worden ist, füllt das in ihr zurückgebliebene Produktöl mit Vorrücken der Biomasse im Kanal 19 zunehmend deren Hohlräume aus, so dass Luftsauerstoff im Wesentlichen vollständig aus der Biomasse verdrängt werden kann, bevor diese mit dem Wärmetauscherring 24 in Kontakt kommt. Die Außenfläche 14 des Wärmetauscherrings, an die die Biomasse angepresst wird, ist zylindrisch. Von einer exakten Zylinderform abweichende GEestaltungen der Reaktionsoberfläche kommen ebenfalls in Bertacht, doch sollte im Falle einer Abweichung von der Zylinderform die Differenz zwischen den Radien des der Achse 5 fernsten und des achsnächsten Punktes der Kontaktoberfläche 14 kleiner sein als die Ausdehnung der Kontaktoberfläche 14 in Richtung der Achse 5.

Bei einer Abwandlung, bei der keine Trocknung durch Zusatz von heißem Produktöl erfolgt, kann, wie in Fig. 2 gestrichelt dargestellt, eine Einspritzleitung 40 für Produktöl oder -gas vorgesehen sein. Diese Einspritzleitung verläuft etwas oberhalb des von zwei Förderwalzen 18 gebildeten Einzugsspalts, und das von ihr über die Länge des Einzugsspalts verteilt ausgestoßene Produktöl oder -gas verdrängt Luft aus den Hohlräumen der eingezogenen Biomasse, so dass diese im Wesentlichen frei von Luftsauerstoff in den Kanal 19 eintritt.

Im Kontakt mit der Außenfläche 14 des Wärmetauscherrings 24 verschwelt die Biomasse innerhalb weniger Sekunden, und die dabei entstehenden Gase verteilten sich im Reaktorgehäuse 21.

Die Reaktortrommel 20 ist langsam drehangetrieben, so dass ständig frische Teile der Außenfläche 14 des Wärmetauscherrings 24 in Kontakt mit der zugeführten Biomasse kommen. Um Verkrustungen zu beseitigen, die sich beim Verschwelen der Biomasse an der Außenfläche 14 bilden können, ist in einem unteren Bereich des Reaktorgehäuses 21 ein Rakel 27 an den Wärmetauscherring 24 angestellt. Von ihm abgeschabte Verkrustungen fallen in einen Graben 28 am Boden des Reaktorgehäuses 21 und werden von einer in dem Graben 28 rotierenden Förderschnecke 29 aus dem Reaktorgehäuse 21 ausgeworfen. Sie bilden einen Teil der als Pyrolysekoks bezeichneten festen Rückstände des Pyrolyseprozesses und sind als Brennstoff nutzbar.

Wie insbesondere in Fig. 3 zu erkennen, ist die Reaktortrommel 20 zwischen zwei Wärmetauscherringen 24 jeweils mit einer Mehrzahl von Löchern 30 versehen, die geformt sind, um den hindurchtretenden Pyrolysegasen einen Drehimpuls in Bezug auf die Drehachse der Reaktortrommel 20 zu versetzen. Dies führt dazu, dass die Gase im Inneren des Trägerzylinders 22 zirkulieren, bevor sie über einen Stutzen 31 an einem Stirnende des Trägerzylinders 22 austreten und die Kondensationsstufe 8 erreichen. Der Trägerzylinder 22 wirkt so als ein Zyklonabscheider, an dessen Innenfläche sich im Pyrolysegas enthaltene Partikel sammeln.

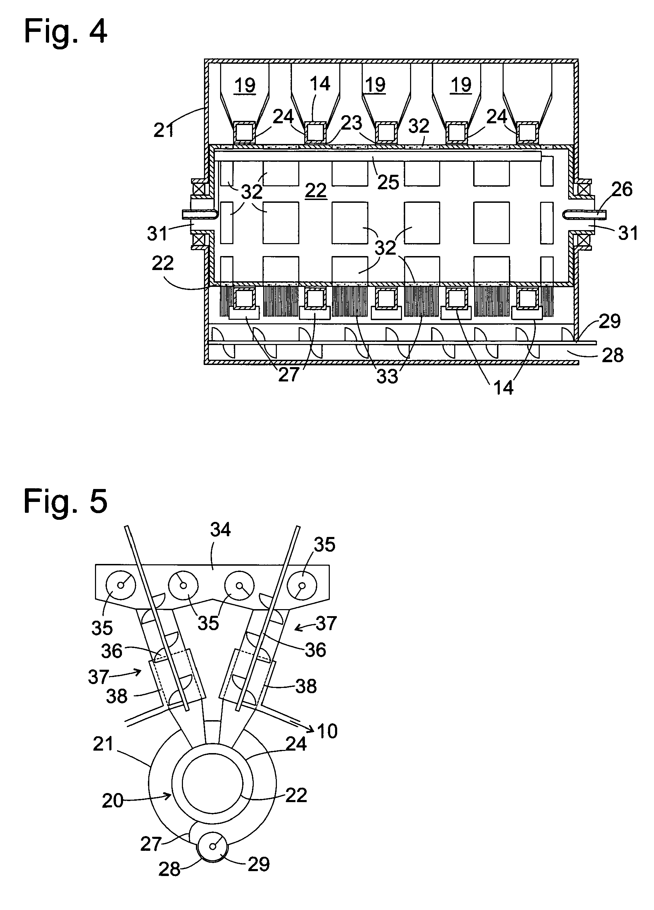

Einer in Fig. 4 in einem zu Fig. 3 analogen Schnitt gezeigten zweiten Ausgestaltung zufolge weist der Trägerzylinder 22 zwischen den Wärmetauscherringen 24 großflächige Öffnungen auf, die mit einem Filter, z.B. Platten 32 eines porösen Keramikmaterials, ausgefüllt sind. Die Größe der Platten 32 hängt ab von den Anforderungen an die mechanische Belastbarkeit der Trommel 20; im Grenzfall kann die Mantelfläche der Reaktortrommel 20 vollständig, auch in den von den Wärmetauscherringen 24 umgebenen Bereichen, aus dem Keramikmaterial bestehen.

Bei dieser zweiten Ausgestaltung scheiden sich die in dem an den Außenflächen 14 der Wärmetauscherringe 24 frei werdenden Pyrolysegas enthaltenen Feststoffpartikel außen an den Filterplatten 32 ab, und analog zu den die Außenflächen 14 reinigenden Rakeln 27 können Rakel oder Bürsten 33 zum Abschaben der Partikel von den Platten 32 in Bodennähe des Reaktorgehäuses 21 vorgesehen sein. So werden die von den Filterplatten 32 abgeschabten oder abgebürsteten Kokspartikel zusammen mit dem an den Wärmetauscherringen 24 gebildeten und von den Rakeln 27 abgeschabten Material von der Förderschnecke 29 aus dem Reaktorgehäuse 21 ausgeräumt.

Fig. 5 zeigt einen Schnitt durch einen Reaktoraufbau gemäß einer dritten Ausgestaltung der Erfindung. In diesem Aufbau sind mehrere der in Fig. 1 gezeigten Komponenten integriert. So bildet eine flache offene Schale 34 im oberen Bereich der Figur gleichzeitig die Trocknungsstufe 7 und einen Schüttbunker entsprechend dem Schüttbunker 17 aus Fig. 2, aus dem der Reaktor 6 versorgt wird. In der Schale 34 erstrecken sich mehrere in jeweils alternierende Richtungen quer zur Schnittebene fördernde Schnecken 35, die die Biomasse mit zugesetztem heißem Produktöl vermengen.

Weitere Förderschnecken 36 mit im Wesentlichen vertikaler Achse greifen in vom Boden der Schale 34 ausgehende, abwärts gerichtete Kanäle 37 ein, um die mit dem Produktöl versetzte Biomasse in die Kanäle 37 hineinzudrücken und darin zu verdichten. Die Wand der Kanäle 37 ist jeweils in einem Abschnitt 38 siebartig durchbrochen, so dass überschüssiges Produktöl aus der Masse austreten und zum Tank 10 abfließen kann. Ein stromabwärtiger Abschnitt 39 der Kanäle 37 ist zum Wärmetauscherring 24 hin verjüngt, um die Biomasse in homogener und hoch verdichteter Form anzupressen. Der Kanal 37 fungiert somit gleichzeitig als Trennstufe 9. Der Aufbau der Reaktortrommel 20 kann der Gleiche sein wie beim ersten oder zweiten Ausführungsbeispiel beschrieben.

### Bezugszeichen

- 1: Entwässerungsstufe
- 2: Häckselstufe
- 3: Entwässerungsstufe
- 4: Konzentrationsstufe
- 5: Drehachse
- 6: Pyrolysereaktor
- 7: Trocknungsstufe
- 8: Kondensationsstufe
- 9: Trennstufe
- 10: Tank
- 11: Filter
- 12: Bunker
- 13: Elektrolysezelle
- 14: Kontaktoberfläche
- 15: Tank
- 16: Brenner
- 17: Schüttbunker
- 18: Förderwalze
- 19: Kanal
- 20: Reaktortrommel
- 21: Reaktorgehäuse
- 22: Trägerzylinder
- 23: Isolationsschicht
- 24: Wärmetauscherring
- 25: Versorgungsleitung
- 26: Abflussleitung
- 27: Rakel
- 28: Graben
- 29: Förderschnecke
- 30: Loch
- 31: Stutzen
- 32: Filterplatte
- 33: Bürste
- 34: Schale
- 35: Schnecke
- 36: Förderschnecke
- 37: Kanal
- 38: Abschnitt
- 39: Abschnitt
- 40: Einspritzleitung

## Patentansprüche

1. Thermochemischer Reaktor (6) mit einem um eine Achse (5) drehbaren Reaktionskörper (20) und einer Anpressvorrichtung (18, 19; 36, 37) zum Anpressen von zu pyrolysierendem Rohstoff gegen eine Kontaktoberfläche (14) des Reaktionskörpers (20), **dadurch gekennzeichnet, dass** die Kontaktoberfläche (14) wenigstens einen Teil einer Umfangsfläche des Reaktionskörpers (20) bildet.

2. Thermochemischer Reaktor nach Anspruch 1 oder 2, **dadurch gekennzeichnet, dass** die Kontaktoberfläche (14) zylinderförmig ist.

3. Thermochemischer Reaktor nach Anspruch 3, **dadurch gekennzeichnet, dass** über dem Reaktionskörper (20) ein Behälter (17) für unverdichteten Rohstoff angeordnet ist und dass die Anpressvorrichtung einen vom Boden des Behälters (17) auf die Kontaktoberfläche (14) zulaufenden Rohstoffkanal (19) umfasst.

4. Thermochemischer Reaktor nach Anspruch 3, **dadurch gekennzeichnet, dass** ein Förderwalzenpaar (18) am Eingang des Rohstoffkanals (19) angeordnet ist.

5. Thermochemischer Reaktor nach Anspruch 4, **dadurch gekennzeichnet, dass** die Förderwalzen (18) zu der Drehachse des Kontaktkörpers (20) parallele Drehachsen haben.

6. Thermochemischer Reaktor nach Anspruch 3, **dadurch gekennzeichnet, dass** eine Förderschnecke (36) in dem Rohstoffkanal (19) angeordnet ist.

7. Thermochemischer Reaktor nach einem der vorhergehenden Ansprüche, **dadurch gekennzeichnet, dass** ein auf die Kontaktoberfläche (14) zulaufender Rohstoffkanal (19, 37) der Anpressvorrichtung (18, 19; 36, 37) sich zur Kontaktoberfläche (14) hin verjüngt.

8. Thermochemischer Reaktor nach einem der Ansprüche 3 bis 7, **dadurch gekennzeichnet, dass** mehrere Rohstoffkanäle (19; 37) auf mehrere in Richtung der Drehachse (5) beabstandete Kontaktoberflächen (14) des Reaktionskörpers (20) und/oder in Umfangsrichtung gestaffelt auf eine gleiche Kontaktoberfläche (14) münden.

9. Thermochemischer Reaktor nach einem der vorhergehenden Ansprüche, **dadurch gekennzeichnet, dass** ein Teil der Oberfläche des Reaktionskörpers (20) als Partikelabscheider ausgebildet ist und eine Abflussleitung (31) für gefilterte gasförmige Reaktionsprodukte von einem inneren Hohlraum des Reaktionskörpers (20) ausgeht.

10. Thermochemischer Reaktor nach Anspruch 9, **dadurch gekennzeichnet, dass** der Reaktionskörper (20) als Zentrifugalabscheider oder als Partikelfilter ausgebildet ist.

11. Thermochemischer Reaktor nach einem der vorhergehenden Ansprüche, **dadurch gekennzeichnet, dass** die Kontaktoberfläche (14) einen Kanal für ein Wärmeträgerfluid umgibt.

12. Thermochemischer Reaktor nach einem der vorhergehenden Ansprüche, **gekennzeichnet durch** eine Zufuhrvorrichtung (40; 7) zum Rückführen von Reaktionsprodukt zum Rohstoff.

13. Thermochemischer Reaktor nach Anspruch 12, **dadurch gekennzeichnet, dass** die Zufuhrvorrichtung (40; 7) stromaufwärts von der Anpressvorrichtung (18, 19; 36, 37) angeordnet ist.

14. Thermochemischer Reaktor nach einem der Ansprüche 1 bis 13, **dadurch gekennzeichnet, dass** die Kontaktoberfläche (14) einen Katalysator, insbesondere einen Hydrierungskatalysator, trägt.

15. Selbstfahrendes Erntefahrzeug mit einem Erntegutaufnehmer und einem thermochemischen Reaktor (6) nach einem der vorhergehenden Ansprüche für die pyrolytische Umsetzung des aufgenommenen Ernteguts.
